# EUROPÄISCHE PATENTANMELDUNG

(11) **EP 3 656 660 A1**
(43) Veröffentlichungstag der Anmeldung: **27.05.2020**
(21) Anmeldenummer: 19210786.0
(22) Anmeldetag: 06.10.2009
(51) Int. Cl.: B64C 9/24

(54) **AN DER TRAGFLÄCHE EINES FLUGZEUGS ANGEORDNETER VORFLÜGEL**

(30) Priorität: 06.10.2008 US 102977 P; 06.10.2008 DE 102008050544
(62) Teilanmeldung aus: 09744054.9
(71) Anmelder: Airbus Operations GmbH, 21129 Hamburg (DE)
(72) Erfinder: Schlipf, Bernhard, 21129 Hamburg (DE); Hue, Xavier, 21129 Hamburg (DE)
(74) Vertreter: Bird & Bird LLP

(57) **Zusammenfassung**

An der Tragfläche eines Flugzeugs angeordneter Vorflügel, wobei die Tragfläche einen Hauptflügel (24) mit einer oberen Beplankung (21), einer unteren Beplankung (22) und einer Profilnase (23) umfasst und der Vorflügel (12) an der Vorderseite des Hauptflügels (24) vorgesehen ist und eine nach vorne gerichtete Profilnase (10) und eine dem Hauptflügel (24) zugewandte, nach hinten gerichtete Endkante (11) aufweist und von einer eingefahrene Reiseflugstellung (I), in welcher der Vorflügel (12) an der Vorderseite des Hauptflügels (24) anliegt und dessen Profil zu einer für den Reiseflug geeigneten Form ergänzt, zur Erhöhung des Auftriebs unter Vergrößerung der Krümmung und der Ausdehnung des Flügelprofils in Flügeltiefenrichtung ausfahrbar ist, wobei der Vorflügel (12) in einer ersten, teilweise ausgefahrenen Stellung (II) mit seiner Endkante (11) am Hauptflügel (24) anliegt und in einer zweiten, weiter ausgefahrenen Stellung (III) mit seiner Endkante (11) unter Freigabe eines energiereiche Luft von der Unterseite des Vorflügels (12) zur Oberseite (21) des Hauptflügels (24) führenden Spalts (14) von der Profilnase (23) des Hauptflügels (24) beabstandet ist. Der Vorflügel (12) umfasst einen Hauptkörper (6) und einen dem Hauptflügel (24) zugewandten Endkantenteil (2), der um die Spannweitenrichtung des Vorflügels (12) gegenüber dem Hauptkörper (6) abwinkelbar beweglich ist und an welchem die Endkante (11) des Vorflügels (12) vorgesehen ist und welcher mittels einer eine Anlagekraft erzeugenden Einrichtung (4; 8; 9) zur Anlage der Vorflügelendkante (11) an der Profilnase (23) des Hauptflügels (24) beaufschlagt ist.

## Beschreibung

Die Erfindung betrifft einen an der Tragfläche eines Flugzeugs angeordneten Vorflügel nach dem Oberbegriff des Anspruchs 1.

Zur Verbesserung des Auftriebs bei einem aerodynamisch wirksamen Flügel, einer Tragfläche, sind im Stand der Technik eine große Anzahl von Hochauftriebskomponenten bekannt, welche dazu dienen, die Krümmung und/oder die Ausdehnung des Flügelprofils in Flügeltiefenrichtung zu vergrößern und damit den Auftrieb der Tragfläche zu erhöhen. Bei Hochauftriebskomponenten, die bezüglich der Strömungsrichtung an der Vorderseite des Tragflächenprofils vorgesehen sind, ist zu unterscheiden zwischen Nasenklappen, welche sich im Wesentlichen ohne Unterbrechung an der Vorderseite des eigentlichen Flügels oder Hauptflügels anschließen, und Vorflügeln, bei denen es, zumindest im ausgefahrenen Zustand, zwischen der Hinterkante des Vorflügels und der Vorderkante des Hauptflügels einen Spalt gibt, durch welchen energiereiche, das heißt, mit großer Geschwindigkeit strömende Luft von der Unterseite des Vorflügels zur Oberseite des Hauptflügels geführt wird, was in einer weiteren Auftriebserhöhung resultiert.

Hochauftriebskomponenten in Form von Vorflügeln dienen bei modernen Verkehrsflugzeugen und Transportflugzeugen mit einem hohen Abfluggewicht zur Auftriebserhöhung. Bei einer der einfachsten und daher bevorzugten Kinematiken bewegt sich der Vorflügel beim Ausfahren auf einer Kreisbahn um eine sich unterhalb des vorderen Bereichs des Hauptflügels befindliche Drehachse, wobei der Vorflügel in einer eingefahrenen Reiseflugstellung an der Vorderseite des Hauptflügels anliegt und dessen Profil zu einer für den Reiseflug geeigneten Form ergänzt. Zur Erhöhung des Auftriebs wird der Vorflügel durch Schwenken um die besagte Drehachse unter Vergrößerung der Krümmung und der Ausdehnung des Gesamtflügelprofils in Flügeltiefenrichtung ausgefahren, wobei sich bei der genannten Kreisbogen-Kinematik mit dem Ausfahren des Vorflügels allmählich ein Spalt zwischen der Endkante des Vorflügels und dem Flügelprofil im Nasenbereich des Hauptflügels bildet. Während ein solcher, energiereiche Luft von der Unterseite des Vorflügels zur Oberseite des Hauptflügels führender Spalt wegen seiner den Auftrieb erhöhenden und eine Grenzschichtablösung verzögernden Wirkung für den Landeanflug von Vorteil und damit erstrebenswert ist, ist er andererseits wegen eines damit verbundenen erhöhten Widerstands für den Start nachteilig. Es wird daher allgemein angestrebt, die Betätigungs-Kinemtatik für den Vorflügel so zu gestalten, dass der Vorflügel in einer ersten, teilweise ausgefahrenen Stellung, die für den Start geeignet ist, mit seiner Endkante am Hauptflügel anliegt, und in einer zweiten, weiter ausgefahrenen Stellung, die für die Landung geeignet ist, mit seiner Endkante unter Freigabe eines solchen, energiereiche Luft von der Unterseite des Vorflügels zur Oberseite des Hauptflügels führenden Spalts von der Beplankung des Hauptflügels im Bereich von dessen Profilnase beabstandet ist.

Aus US 4 399 970, US 5 839 699 und US 6 682 023 sind Hochauftriebshilfen in Form von Vorflügeln bekannt, bei denen der Vorflügel in der eingefahrenen Position, in der StartPosition und in dazwischenliegenden Positionen keinen Spalt zwischen Vorflügel und Hauptflügel freigibt. Ein solcher wird erst während des weiteren Ausfahrvorgangs des Vorflügels zur Landekonfiguration hin kontinuierlich geöffnet. Dies wird durch zusätzliche kinematische Elemente oder (bei US 5 839 699) durch eine Anpassung des Nasenprofils des Hauptflügels an die Kurvenbahn der Vorflügelendkante erreicht. Verbunden mit solchen Maßnahmen sind dementsprechend entweder ein erhöhtes Gewicht aufgrund der zusätzlichen kinematischen Elemente oder eine aerodynamisch nachteilige Spaltgeometrie bei der Anpassung der Flügelnase im letztgenannten Fall.

Weiter ist aus der US 4 753 402 ein mittels bogenförmiger Schienen gegenüber dem Hauptflügel ausfahrbarer Vorflügel bekannt, welcher um einen kleinen Winkel gegen die Schienen verdrehbar gelagert und mittels einer Blattfederanordnung so gegen die Schienen vorgespannt ist, dass der Spalt zwischen Vorflügel und Hauptflügel bei Überschreiten einer bestimmten aerodynamischen Kraft vergrößert wird, indem sich die dem Hauptflügel zugewandte, nach hinten gerichtete Endkante entgegen der Federkraft nach vorne und oben verlagert. Der Vorflügel selbst hat ein starres, unveränderliches Profil.

Die Aufgabe der Erfindung ist es, einen Vorflügel der eingangs vorausgesetzten Art so auszubilden, dass er eine strukturell einfache Konstruktion verbunden mit einer geringen Anzahl von Teilen bei gleichzeitig hoher aerodynamischer Wirksamkeit aufweist.

Die Aufgabe wird gelöst durch einen an der Tragfläche eines Flugzeugs angeordneten Vorflügel mit den Merkmalen des Anspruchs 1. Vorteilhafte Ausgestaltungen und Weiterbildungen des erfindungsgemäßen Vorflügels sind in den Unteransprüchen angegeben.

Durch die Erfindung wird ein an der Tragfläche eines Flugzeugs angeordneter Vorflügel geschaffen, wobei die Tragfläche einen Hauptflügel mit einer oberen Beplankung, einer unteren Beplankung und einer Profilnase umfasst und der Vorflügel an der Vorderseite des Hauptflügels vorgesehen ist und eine nach vorne gerichtete Profilnase und eine dem Hauptflügel zugewandte, nach hinten gerichtete Endkante aufweist und von einer eingefahrenen Reiseflugstellung, in welcher der Vorflügel an der Vorderseite des Hauptflügels anliegt und dessen Profil zu einer für den Reiseflug geeigneten Form ergänzt, zur Erhöhung des Auftriebs unter Vergrößerung der Krümmung und der Ausdehnung des Flügelprofils in Flügeltiefenrichtung ausfahrbar ist, wobei der Vorflügel in einer (von typischerweise mehreren) ersten, teilweise ausgefahrenen Stellung mit seiner Endkante am Hauptflügel anliegt und in einer (von typischerweise mehreren) zweiten, weiter ausgefahrenen Stellung mit seiner Endkante unter Freigabe eines energiereiche Luft von der Unterseite des Vorflügels zur Oberseite des Hauptflügels führenden Spalts von der Profilnase des Hauptflügels beabstandet ist. Erfindungsgemäß ist es vorgesehen, dass der Vorflügel einen Hauptkörper und einen dem Hauptflügel zugewandten Endkantenteil umfasst, der um die Spannweitenrichtung des Vorflügels gegenüber dem Hauptkörper abwinkelbar beweglich ist und an welchem die Endkante des Vorflügels vorgesehen ist und welcher mittels einer eine Anlagekraft erzeugenden Einrichtung bei eingefahrener und teilweise ausgefahrener Stellung des Vorflügels zur Anlage der Vorflügelendkante an der Profilnase des Hauptflügels beaufschlagt ist.

Gemäß einer Ausführungsform des erfindungsgemäßen Vorflügels ist es vorgesehen, dass der Endkantenteil über ein Gelenk mit dem Hauptkörper des Vorflügels verbunden ist, um das der Endkantenteil um die Spannweitenrichtung des Vorflügels gegenüber dem Hauptkörper abwinkelbar beweglich ist.

Gemäß einer Ausführungsform ist das Gelenk durch ein biegeelastisches Element gebildet.

Gemäß einer Ausführungsform ist das biegeelastische Element an einer die Oberseite des Vorflügels bildenden Außenhaut vorgesehen.

Gemäß einer Ausführungsform ist die die Anlagekraft erzeugende Einrichtung die Unterseite des Endkantenteils mit dem Hauptkörper des Vorflügels verbindend vorgesehen.

Gemäß einer Ausführungsform ist die die Anlagekraft erzeugende Einrichtung durch ein elastisches Element gebildet.

Dabei kann es vorgesehen sein, dass das elastische Element ein translatorisch-elastisches Element ist.

Gemäß einer anderen Ausführungsform des erfindungsgemäßen Vorflügels ist die die Anlagekraft erzeugende Einrichtung durch einen Aktuator gebildet. Gemäß einer anderen Ausführungsform des erfindungsgemäßen Vorflügels ist das biegeelastische Element durch den Endkantenteil selbst gebildet, welcher zumindest in einem dem Hauptkörper des Vorflügels benachbarten Bereich durch ein elastisches, flexibles Material gebildet ist.

Gemäß einer Ausführungsform erstreckt sich das das Gelenk bildende biegeelastische Element über im Wesentlichen die ganze Spannweite des Vorflügels.

Gemäß einer Ausführungsform erstreckt sich das die die Anlagekraft erzeugende Einrichtung bildende translatorisch-elastische Element über im Wesentlichen die ganze Spannweite des Vorflügels.

Gemäß einer Ausführungsform ist der Aktuator durch einen Formgedächtnis-Aktuator oder einen Piezo-Aktuator gebildet.

Gemäß einer Weiterbildung der Erfindung ist der Aktuator zur Steuerung mit einer Steuereinrichtung gekoppelt, durch welche der Aktuator so steuerbar ist, dass bei teilweise ausgefahrener Stellung des Vorflügels die Vorderflügelendkante zur Freigabe des Luft zur Oberseite des Hauptflügels führenden Spalts im Sinne einer Erhöhung des maximal möglichen Auftriebsbeiwerts wahlweise vom Hauptflügel abgehoben wird.

Gemäß einer anderen Weiterbildung des erfindungsgemäßen Vorflügels ist ein Anschlagelement zur Begrenzung der Abwinkelung des Endkantenteils gegenüber dem Hauptkörper des Vorflügels vorgesehen.

Dabei kann das Anschlagelement an dem die Anlagekraft erzeugenden Element vorgesehen sein.

Im Folgenden werden Ausführungsbeispiele der Erfindung anhand der Zeichnung erläutert.

Es zeigt:
- Fig. 1: eine schematisierte Querschnittsdarstellung eines an der Tragfläche eines Flugzeugs angeordneten Vorflügels gemäß einem Ausführungsbeispiel der Erfindung;
- Fig. 2: eine vergrößerte Querschnittsansicht durch einen Vorflügel gemäß einem Ausführungsbeispiel der Erfindung;
- Fig. 3a) und 3b): jeweils eine vergrößerte Querschnittsansicht eines Vorflügels gemäß zwei weiteren Ausführungsbeispielen der Erfindung;
- Fig. 4: einen nochmals vergrößerten Ausschnitt eines Teils des erfindungsgemäßen Vorflügels gemäß noch einem weiteren Ausführungsbeispiel; und
- Fig. 5: eine schematisierte Querschnittsdarstellung eines an der Tragfläche eines Flugzeugs angeordneten Vorflügels gemäß dem Stand der Technik.

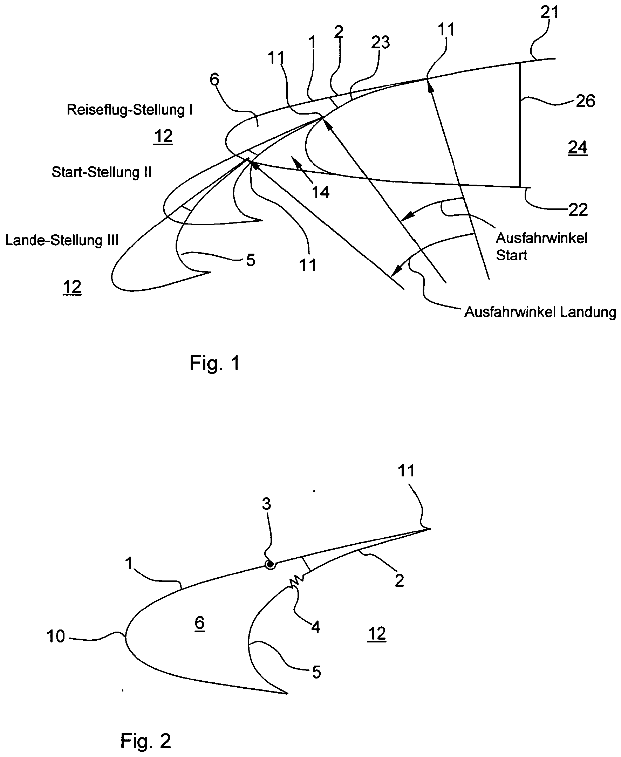

Fig. 1 zeigt einen an der Tragfläche eines Flugzeugs angeordneten Vorflügel 12. Die Tragfläche umfasst einen Hauptflügel 24, der eine obere Beplankung 21, eine untere Beplankung 22 und eine Profilnase 23 aufweist. Als inneres tragendes Strukturbauteil des Hauptflügels 24 ist ein Holm 26 vorgesehen. Der Vorflügel 12 ist an der Vorderseite des Hauptflügels 24 angeordnet und hat eine nach vorne gerichtete Profilnase 10 und eine dem Hauptflügel 24 zugewandte, nach hinten gerichtete Endkante 11.

Der Vorflügel 12 ist von einer eingefahrenen Reiseflugstellung I, in welcher der Vorflügel 12 an der Vorderseite des Hauptflügels 24 anliegt und dessen Profil zu einer für den Reiseflug geeigneten Form ergänzt, zur Erhöhung des Auftriebs unter Vergrößerung der Krümmung und der Ausdehnung des Flügelprofils in Flügeltiefenrichtung ausfahrbar. In einer ersten, teilweise ausgefahrenen Stellung II liegt der Vorflügel 12 mit seiner Endkante 11 am Hauptflügel 24 an, diese Stellung kann, weil sie zu einem für den Startvorgang geeigneten Flügelprofil beiträgt als Start-Stellung bezeichnet werden. In einer zweiten, weiter ausgefahrenen Stellung III ist der Vorflügel 12 dagegen mit seiner Endkante 11 von der Profilnase 23 des Hauptflügels 24 beabstandet, so dass ein Spalt 14 freigegeben ist, welcher energiereiche, das heißt eine hohe Strömungsgeschwindigkeit aufweisende Luft von der Unterseite des Vorflügels 12 zur Oberseite 21 des Hauptflügels 24 führt. Diese Stellung kann, da sie zu einer starken Auftriebserhöhung im Landeanflug geeignet ist, als Landeanflug-Stellung bezeichnet werden. In der Figur ist eine einzige teilweise ausgefahrene Stellung II als "erste" ausgefahrene Stellung und eine einzige, weiter ausgefahrene Stellung III als eine "zweite" ausgefahrene Stellung dargestellt, es versteht sich jedoch, dass es zwischen der Reiseflugstellung I, in welcher der Vorflügel 12 vollständig eingefahren an der Vorderseite des Hauptflügels 24 anliegt, und der dargestellten ersten ausgefahrenen Stellung II eine Anzahl von Stellungen gibt, in welchen die Endkante 11 des Vorflügels 12 am Hauptflügel 24, typischerweise an der Profilnase 23 desselben anliegt, und eine Anzahl von ausgefahrenen Stellungen zwischen der Stellung II und der Stellung III, in welchen der besagte Spalt 14 freigegeben ist. Typischerweise ist der Vorflügel 12 von der Reiseflugstellung I kontinuierlich bis in die Stellung III bzw. die vollständig ausgefahrene Stellung ausfahrbar.

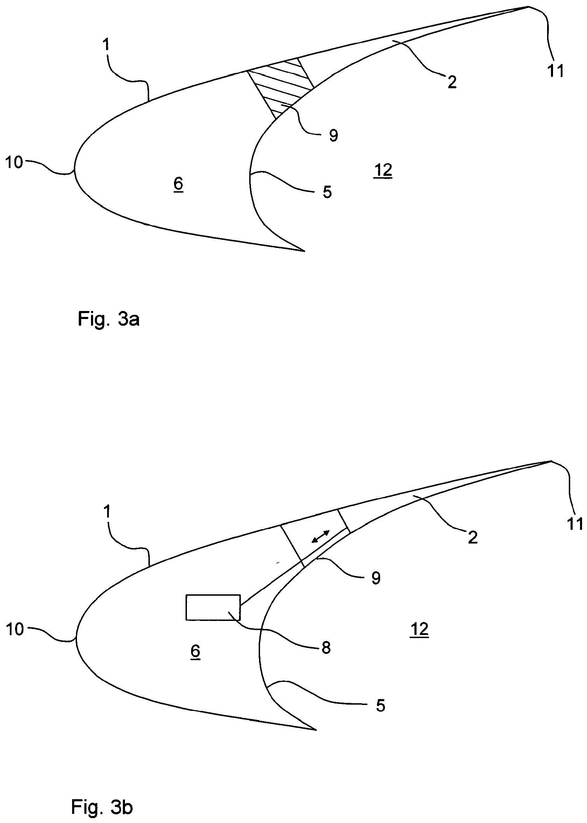

Wie die Fig. 1 und insbesondere die vergrößerten Figuren 2 sowie 3a) und 3b) zeigen, umfasst der Vorflügel 12 einen Hauptkörper 6 und einen Endkantenteil 2, welcher dem Hauptflügel 24 zugewandt ist. Der Endkantenteil 2 ist um die Spannweitenrichtung des Vorflügels 12, also im Wesentlichen um eine Richtung oder Achse, die mehr oder weniger parallel zur Flügelvorderkante verläuft, gegenüber dem Hauptkörper 6 abwinkelbar beweglich.

Die dem Hauptflügel 24 zugewandte Endkante 11 des Vorflügels 12 ist am Ende des Endkantenteils 2 vorgesehen und somit aufgrund des Umstandes, dass der Endkantenteil um die Spannweitenrichtung abwinkelbar beweglich ist, in der Lage, beim Ausfahren des Vorflügels 12 der Kontur des Hauptflügels 24 in dessen vorderem Bereich zu folgen und an dieser anzuliegen, wie in Fig. 1 zwischen der Reiseflugstellung I und der teilweise ausgefahrenen Stellung II gezeigt. Damit die Endkante 11 in der gewünschten Weise der Kontur des Hauptflügels 24 in dessen vorderem Bereich bzw. an der Profilnase 23 folgen kann, ist eine eine Anlagekraft erzeugende Einrichtung vorgesehen, so dass die Vorflügelendkante 11 bei eingefahrener und teilweise ausgefahrener Stellung des Vorflügels 12 am Hauptflügel 24 anliegt, es einen Spalt 14 also nicht gibt.

Bei der in Fig. 2 gezeigten Ausführungsform ist an der die Oberseite des Vorflügels 12 bildenden Außenhaut 1 ein biegeelastisches Element 3 vorgesehen, welches die Funktion eines Gelenks ausübt. An der Unterseite des Vorflügels 12 ist bei dem in Fig. 2 gezeigten Ausführungsbeispiel ein translatorisch-elastisches Element 4 vorgesehen, also ein Element, das in Richtung parallel zur unteren oder Rückseitenbeplankung des Vorflügels 12 unter Erzeugung einer elastischen Kraft oder Federkraft in seiner Länge veränderbar ist und dessen elastische Steifigkeit so dimensioniert ist, dass in dem gewünschten Bereich zwischen den Stellungen I und II die Endkante 11 zuverlässig an der Profilnase 23 des Hauptflügels 24 anliegt, der Spalt 14 also geschlossen ist, auch unter der auf den Endkantenteil 4 einwirkenden aerodynamischen Last, also der Druckdifferenz zwischen Flügeloberseite und Flügelunterseite. Die elastische Steifigkeit des biegeelastischen Elements 3 ist entsprechend bei der Auslegung der Steifigkeit des translatorisch-elastischen Elements 4 zusätzlich zu berücksichtigen.

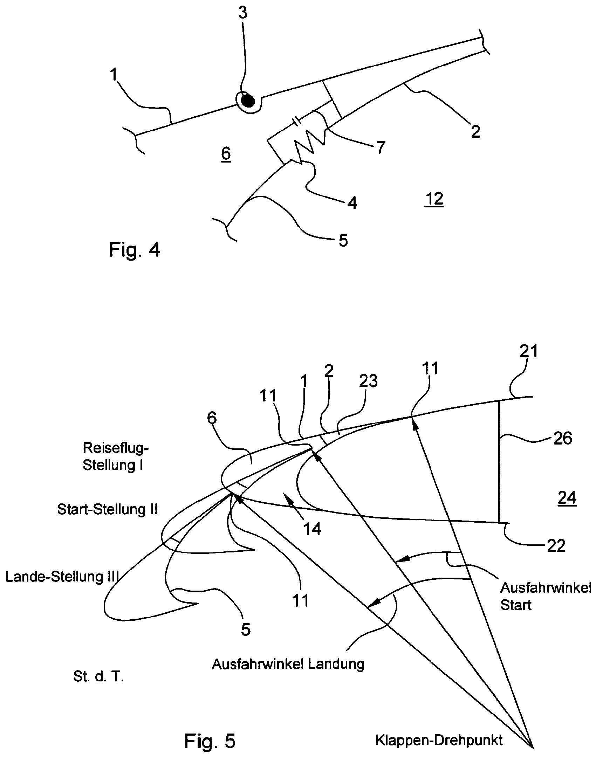

Beim weiteren Ausfahren des Vorflügels 12 über die Stellung II hinaus in Richtung zur Stellung III, vgl. Fig. 1, soll nun der Spalt 14 kontinuierlich geöffnet werden, d.h. die Endkante 11 nicht mehr an der Profilnase 23 des Hauptflügels 24 anliegen. Es kann beispielsweise ein Anschlagelement 7 vorgesehen sein, welches in der vergrößerten Ausschnittsdarstellung von Fig. 4 schematisch dargestellt ist, und/oder die Steifigkeit der elastischen Elemente 3 und 4 ist entsprechend auszulegen. In der Reiseflugstellung (Cruise-Position) ist das translatorischelastische Element 4 so stark gespannt, dass die Endkante 11 zuverlässig am Hauptflügel 24 anliegt, also irgendwo im Bereich des Übergangs von der Profilnase 23 zur oberen Beplankung 21 des Hauptflügels 24, wie es in Fig. 1 dargestellt ist. Beim Ausfahren des Vorflügels 12 von der Reiseflugstellung I zur Startstellung II verkürzt sich das translatorisch-elastische Element 4, da der Endkantenteil 2 beim Ausfahren des Vorflügels 12 zunehmend in Richtung zur Profilnase 23 hin abgewinkelt wird.

Zum Vergleich zeigt Fig. 5 eine schematische Darstellung ähnlich Fig. 1 , für den Fall eines Vorflügels 12 mit starrem Endkantenbauteil. Es ist zu sehen, dass beim Ausfahren des Vorflügels 12 kontinuierlich ein Spalt 14 zwischen der Endkante 12 und der Profilnase 23 entsteht. Dies hat seinen Grund darin, dass der Radius der Bahn, typischerweise Kreisbahn, über die der Vorflügel 12 ausgefahren wird, größer ist als der Krümmungsradius der Profilnase 23 im entsprechenden Bereich.

Das die Anlagekraft erzeugende Einrichtung bildende biegeelastische Element kann auch durch das Endkantenteil 2 selbst gebildet sein, welches dann zumindest in einem Übergangsbereich, also einem dem Hauptkörper 6 des Vorflügels 12 benachbarten Bereich 9 durch ein elastisches, flexibles Material mit entsprechenden Rückstelleigenschaften, also einer entsprechenden elastischen Steifigkeit gebildet ist. Ein solches elastisches Material ist in Fig. 3a) (schematisiert durch einen schraffierten Bereich) gezeigt.

Andererseits kann die die Anlagekraft erzeugende Einrichtung durch einen (steuerbaren) Aktuator 8 gebildet sein, wie schematisch in Fig. 3b) dargestellt. Ein solcher Aktuator kann in verschiedener geeigneter Weise verwirklicht sein, beispielsweise durch Einsatz von Formgedächtnislegierungen oder Piezo-Aktuatoren. Auf diese Weise wäre auch eine aktive Steuerung der Spaltgröße 14 möglich.

Dies könnte dahingehend ausgenutzt werden, dass der Spalt 14 in der Startkonfiguration, Stellung II, bei gewöhnlichen Anstellwinkeln des Flugzeugs geschlossen ist, dass er sich jedoch bei ungewöhnlich hohen Anstellwinkeln öffnet, wodurch der maximal verfügbare Auftriebsbeiwert des Flugzeugs deutlich verbessert wird. Hierdurch können Flugsicherheit und Flugzeugauslegung vorteilhaft beeinflusst werden.

Das biegeelastische Element 3, welches die Gelenkfunktion erfüllt, wird sich typischerweise über im Wesentlichen die ganze Spannweite des Vorflügels 12 erstrecken, also über die gesamte Länge des Vorflügels 12 in Spannweitenrichtung. Dieses Element 3 kann beispielsweise als ein durchgehendes Federelement aus Federstahl oder einem faserverstärktem Kunststoff hergestellt sein, welches eine entsprechende Biegeelastizität bzw. Flexibilität aufweist. Das biegeelastische Element 3 kann integral in der Außenhaut 1 vorgesehen sein, also als ein abschnittsweise flexibler Bereich am Übergang zwischen dem Hauptkörper 6 und dem Endkantenteil 2 des Vorflügels 12 in der Außenhaut 1, oder es kann als ein separates Teil hergestellt und dann an dieser Stelle in die Außenhaut 1 des Vorflügels 12 eingefügt sein. Die Fixierung in der Außenhaut 1 kann durch Kleben oder eine Nietverbindung in herkömmlicher Weise vorgenommen sein. Durch eine entsprechende Auslegung der Form und der Dicke des Elements 3 kann es an die Steifigkeits- und Festigkeitsanforderungen angepasst werden, welche sich hier stellen.

Das translatorisch-elastische Element 4 kann ebenfalls als ein durchgehendes Federelement hergestellt sein, welches sich dann wiederum über im Wesentlichen die ganze Spannweite des Vorflügels 12 erstreckt. Auch dieses kann aus Federstahl oder faserverstärktem Kunststoff hergestellt sein. Insbesondere bietet es sich an, dieses Element 4 in einer Blattfeder-Bauweise herzustellen. Es kann dann aus mehreren übereinanderliegenden und gegeneinander verschiebbaren Blechen bestehen. Durch eine geeignete Wahl von Anzahl und Stärke der Bleche können gleichzeitig die notwendige Festigkeit und die gewünschte elastische Steifigkeit erreicht werden.

Anstelle der Darstellung in den Figuren 2 und 4 können das biegeelastische Element 3 und das translatorisch-elastische Element 4 auch gegeneinander vertauscht sein, also ersteres unten und letzteres oben angeordnet sein. Auch könnte das Gelenk oder allgemeiner ausgedrückt, die Drehachse, um die der Endkantenteil 2 gegenüber dem Hauptkörper 6 abwinkelbar beweglich ist, sich im Inneren des Vorflügels 12 auf halber Höhe oder anderswo zwischen der oberen und der unteren Beplankung des Vorflügels 12 befinden, dann unterliegen sowohl die obere als auch die untere Beplankung des Vorflügels 12 einer entsprechenden Längenänderung. Insbesondere wäre dies der Fall beim Ausführungsbeispiel von Figur 3a) mit dem elastischen Material im Übergangsbereich 9 zwischen Hauptkörper 6 und Endteil 2.

Der in Fig. 4 gezeigte Anschlag kann unabhängig oder zusammen mit dem die Anlagekraft erzeugenden Element 4; 8 vorgesehen sein, sei dies ein elastisches Element oder ein Aktuator.

Im Folgenden werden Ausführungsformen der Erfindung beschrieben:
1. An der Tragfläche eines Flugzeugs angeordneter Vorflügel, wobei die Tragfläche einen Hauptflügel 24 mit einer oberen Beplankung 21, einer unteren Beplankung 22 und einer Profilnase 23 umfasst und der Vorflügel 12 an der Vorderseite des Hauptflügels 24 vorgesehen ist und eine nach vorne gerichtete Profilnase 10 und eine dem Hauptflügel 24 zugewandte, nach hinten gerichtete Endkante 11 aufweist und von einer eingefahrenen Reiseflugstellung I, in welcher der Vorflügel 12 an der Vorderseite des Hauptflügels 24 anliegt und dessen Profil zu einer für den Reiseflug geeigneten Form ergänzt, zur Erhöhung des Auftriebs unter Vergrößerung der Krümmung und der Ausdehnung des Flügelprofils in Flügeltiefenrichtung ausfahrbar ist, wobei der Vorflügel 12 in einer ersten, teilweise ausgefahrenen Stellung II mit seiner Endkante 11 am Hauptflügel 24 anliegt und in einer zweiten, weiter ausgefahrenen Stellung III mit seiner Endkante 11 unter Freigabe eines energiereiche Luft von der Unterseite des Vorflügels 12 zur Oberseite 21 des Hauptflügels 24 führenden Spalts 14 von der Profilnase 23 des Hauptflügels 24 beabstandet ist, dadurch gekennzeichnet, dass der Vorflügel 12 einen Hauptkörper 6 und einen dem Hauptflügel 24 zugewandten Endkantenteil 2 umfasst, der um die Spannweitenrichtung des Vorflügels 12 gegenüber dem Hauptkörper 6 abwinkelbar beweglich ist und an welchem die Endkante 11 des Vorflügels 12 vorgesehen ist und welcher mittels einer eine Anlagekraft erzeugenden Einrichtung 4; 8; 9 zur Anlage der Vorflügelendkante 11 an der Profilnase 23 des Hauptflügels 24 beaufschlagt ist.
2. Vorflügel nach Ausführungsform 1, dadurch gekennzeichnet, dass der Endkantenteil 2 über ein Gelenk 3 mit dem Hauptkörper 6 des Vorflügels 12 verbunden ist, um das der Endkantenteil 2 um die Spannweitenrichtung des Vorflügels 12 gegenüber dem Hauptkörper 6 abwinkelbar beweglich ist.
3. Vorflügel nach Ausführungsform 2, dadurch gekennzeichnet, dass das Gelenk durch ein biegeelastisches Element 3 gebildet ist.
4. Vorflügel nach Ausführungsform 3, dadurch gekennzeichnet, dass das biegeelastische Element 3 an einer die Oberseite des Vorflügels 12 bildenden Außenhaut 1 vorgesehen ist.
5. Vorflügel nach Ausführungsform 4, dadurch gekennzeichnet, dass die die Anlagekraft erzeugende Einrichtung 4; 8 die Unterseite des Endkantenteils 2 mit dem Hauptkörper 6 des Vorflügels 12 verbindend vorgesehen ist.
6. Vorflügel nach einer der Ausführungsformen 1 bis 5, dadurch gekennzeichnet, dass die die Anlagekraft erzeugende Einrichtung durch ein elastisches Element 4 gebildet ist.
7. Vorflügel nach Ausführungsform 6, dadurch gekennzeichnet, dass das elastische Element 4 ein translatorisch-elastisches Element ist.
8. Vorflügel nach einer der Ausführungsformen 1 bis 5, dadurch gekennzeichnet, dass die die Anlagekraft erzeugende Einrichtung durch einen Aktuator 8 gebildet ist.
9. Vorflügel nach Ausführungsform 3, dadurch gekennzeichnet, dass das biegeelastische Element durch den Endkantenteil 2 selbst gebildet ist, welches zumindest in einem dem Hauptkörper 6 des Vorflügels 12 benachbarten Bereich 9 durch ein elastisches, flexibles Material gebildet ist.
10. Vorflügel nach Ausführungsform 3, 4 oder 9, dadurch gekennzeichnet, dass das biegeelastische Element 3; 9 sich über im Wesentlichen die ganze Spannweite des Vorflügels 12 erstreckt.
11. Vorflügel nach Ausführungsform 6, 7 oder 10, dadurch gekennzeichnet, dass das translatorisch-elastische Element 4 sich über im Wesentlichen die ganze Spannweite des Vorflügels 12 erstreckt.
12. Vorflügel nach Ausführungsform 8, dadurch gekennzeichnet, dass der Aktuator 8 durch einen Formgedächtnis-Aktuator oder einen Piezo-Aktuator gebildet ist.
13. Vorflügel nach Ausführungsform 8 oder 12, dadurch gekennzeichnet, dass der Aktuator 8 zur Steuerung mit einer Steuereinrichtung gekoppelt ist, durch welche der Aktuator 8 so steuerbar ist, dass bei teilweise ausgefahrener Stellung II des Vorflügels 12 die Vorderflügelendkante 11 zur Freigabe des Luft zur Oberseite des Hauptflügels 24 führenden Spalts 14 im Sinne einer Erhöhung des maximal möglichen Auftriebsbeiwerts wahlweise vom Hauptflügel 24 abgehoben wird.
14. Vorflügel nach einem der Ausführungsformen 1 bis 13, dadurch gekennzeichnet, dass ein Anschlagelement 7 zur Begrenzung der Abwinkelung des Endkantenbauteils 2 gegenüber dem Hauptkörper 6 des Vorflügels 12 vorgesehen ist.
15. Vorflügel nach Ausführungsform 14, dadurch gekennzeichnet, dass das Anschlagelement 7 an dem die Anlagekraft erzeugenden Element 4; 8 vorgesehen ist.

### Bezugszeichenliste

- 1.: Außenkante
- 2.: Endkantenbauteil
- 3.: biegeelastisches Element
- 4.: translatorisch-elastisches Element
- 5.: Rückseitenbeplankung
- 6.: Hauptkörper
- 7.: Anschlagelement
- 8.: Aktuator
- 9.: elastischer Bereich
- 10.: Profilnase
- 11.: Endkante
- 12.: Vorflügel
- 14.: Spalt
- 21.: Obere Beplankung
- 22.: Untere Beplankung
- 23.: Profilnase
- 24.: Hauptflügel
- 26.: Holm

## Patentansprüche

1. Vorflügel eingerichtet zur Anordnung an der Tragfläche eines Flugzeugs, wobei die Tragfläche einen Hauptflügel (24) mit einer oberen Beplankung (21), einer unteren Beplankung (22) und einer Profilnase (23) umfasst und wobei der Vorflügel (12) eingerichtet ist, um an der Vorderseite des Hauptflügels (24) vorgesehen zu sein, und eine nach vorne gerichtete Profilnase (10) und eine dem Hauptflügel (24) zugewandte, nach hinten gerichtete Endkante (11) aufweist und eingerichtet ist, um von einer eingefahrenen Reiseflugstellung (I), in welcher der Vorflügel (12) an der Vorderseite des Hauptflügels (24) anliegt und dessen Profil zu einer für den Reiseflug geeigneten Form ergänzt, zur Erhöhung des Auftriebs unter Vergrößerung der Krümmung und der Ausdehnung des Flügelprofils in Flügeltiefenrichtung ausfahrbar zu sein, wobei der Vorflügel (12) in einer ersten, teilweise ausgefahrenen Stellung (II) mit seiner Endkante (11) am Hauptflügel (24) anliegt und in einer zweiten, weiter ausgefahrenen Stellung (III) mit seiner Endkante (11) unter Freigabe eines energiereiche Luft von der Unterseite des Vorflügels (12) zur Oberseite (21) des Hauptflügels (24) führenden Spalts (14) von der Profilnase (23) des Hauptflügels (24) beabstandet ist, **dadurch gekennzeichnet, dass** der Vorflügel (12) einen Hauptkörper (6) und einen dem Hauptflügel (24) zugewandten Endkantenteil (2) umfasst, der um die Spannweitenrichtung des Vorflügels (12) gegenüber dem Hauptkörper (6) abwinkelbar beweglich ist und an welchem die Endkante (11) des Vorflügels (12) vorgesehen ist und welcher mittels einer eine Anlagekraft erzeugenden Einrichtung (4; 8; 9) zur Anlage der Vorflügelendkante (11) an der Profilnase (23) des Hauptflügels (24) beaufschlagt ist.

2. Vorflügel nach Anspruch 1, **dadurch gekennzeichnet, dass** der Endkantenteil (2) über ein Gelenk (3) mit dem Hauptkörper (6) des Vorflügels (12) verbunden ist, um das der Endkantenteil (2) um die Spannweitenrichtung des Vorflügels (12) gegenüber dem Hauptkörper (6) abwinkelbar beweglich ist.

3. Vorflügel nach Anspruch 2, **dadurch gekennzeichnet, dass** das Gelenk durch ein biegeelastisches Element (3) gebildet ist.

4. Vorflügel nach Anspruch 3, **dadurch gekennzeichnet, dass** das biegeelastische Element (3) an einer die Oberseite des Vorflügels (12) bildenden Außenhaut (1) vorgesehen ist.

5. Vorflügel nach Anspruch 4, **dadurch gekennzeichnet, dass** die die Anlagekraft erzeugende Einrichtung (4; 8) die Unterseite des Endkantenteils (2) mit dem Hauptkörper (6) des Vorflügels (12) verbindend vorgesehen ist.

6. Vorflügel nach einem der Anspruch 1 bis 5, **dadurch gekennzeichnet, dass** die die Anlagekraft erzeugende Einrichtung durch ein elastisches Element (4) gebildet ist, wobei das elastische Element (4) vorzugsweise ein translatorisch-elastisches Element ist.

7. Vorflügel nach einem der Ansprüche 1 bis 5, **dadurch gekennzeichnet, dass** die die Anlagekraft erzeugende Einrichtung durch einen Aktuator (8) gebildet ist.

8. Vorflügel nach Anspruch 3, **dadurch gekennzeichnet, dass** das biegeelastische Element durch den Endkantenteil (2) selbst gebildet ist, welches zumindest in einem dem Hauptkörper (6) des Vorflügels (12) benachbarten Bereich (9) durch ein elastisches, flexibles Material gebildet ist.

9. Vorflügel nach Anspruch 3, 4 oder 8, **dadurch gekennzeichnet, dass** das biegeelastische Element (3; 9) sich über im Wesentlichen die ganze Spannweite des Vorflügels (12) erstreckt.

10. Vorflügel nach Anspruch 6 oder 9, **dadurch gekennzeichnet, dass** das translatorisch-elastische Element (4) sich über im Wesentlichen die ganze Spannweite des Vorflügels (12) erstreckt.

11. Vorflügel nach Anspruch 7, **dadurch gekennzeichnet, dass** der Aktuator (8) durch einen Formgedächtnis-Aktuator oder einen Piezo-Aktuator gebildet ist.

12. Vorflügel nach Anspruch 7 oder 11, **dadurch gekennzeichnet, dass** der Aktuator (8) zur Steuerung mit einer Steuereinrichtung gekoppelt ist, durch welche der Aktuator (8) so steuerbar ist, dass bei teilweise ausgefahrener Stellung (II) des Vorflügels (12) die Vorderflügelendkante (11) zur Freigabe des Luft zur Oberseite des Hauptflügels (24) führenden Spalts (14) im Sinne einer Erhöhung des maximal möglichen Auftriebsbeiwerts wahlweise vom Hauptflügel (24) abgehoben werden kann.

13. Vorflügel nach einem der Ansprüche 1 bis 12, **dadurch gekennzeichnet, dass** ein Anschlagelement (7) zur Begrenzung der Abwinkelung des Endkantenbauteils (2) gegenüber dem Hauptkörper (6) des Vorflügels (12) vorgesehen ist, wobei das Anschlagelement (7) vorzugsweise an dem die Anlagekraft erzeugenden Element (4; 8) vorgesehen ist.

14. Anordnung umfassend die Tragfläche eines Flugzeugs und einen an der Tragfläche angeordneten Vorflügel nach einem der Ansprüche 1 bis 13.

15. Flugzeug mit einem Vorflügel nach einem der Ansprüche 1 bis 13 oder mit einer Anordnung nach Anspruch 14.
